Europäisches Patentamt

European Patent Office

Office européen des brevets

(19)

(11) Veröffentlichungsnummer: **0 003 067**
**B1**

(12) EUROPÄISCHE PATENTSCHRIFT

(45) Veröffentlichungstag der Patentschrift:
04.11.81

(21) Anmeldenummer: **78200385.9**

(22) Anmeldetag: **21.12.78**

(51) Int. Cl.³: **C 25 D 13/06,** C 08 C 19/40

(54) Kathodisch abscheidbares Überzugsmittel.

(30) Priorität: **14.01.78 DE 2801523**

(43) Veröffentlichungstag der Anmeldung:
**25.07.79 Patentblatt 79/15**

(45) Bekanntmachung des Hinweises auf die Patenterteilung:
**04.11.81 Patentblatt 81/44**

(84) Benannte Vertragsstaaten:
**BE CH DE FR GB IT NL SE**

(56) Entgegenhaltungen:
**US-A-3 937 679**
**US-A-4 038 166**

(73) Patentinhaber: **METALLGESELLSCHAFT AG,**
**Reuterweg 14 Postfach 3724, D-6000 Frankfurt/M.1 (DE)**

(72) Erfinder: **Quack, Günther, Dr. Dipl.-Chem., An der**
**Kreuzwiese 47a, D-6370 Oberursel 5 (DE)**
Erfinder: **Steinfort, Klaus, Dr. Dipl.-Chem.,**
**Burgenblick 14, D-6240 Königstein 2 (DE)**
Erfinder: **Linden, René, Langobardenweg 13,**
**D-6230 Frankfurt am Main 80 (DE)**

(74) Vertreter: **Fischer, Ernst, Dr., Reuterweg 14,**
**D-6000 Frankfurt am Main 1 (DE)**

## Kathodisch abscheidbares Überzugsmittel

Die Erfindung betrifft ein kathodisch abscheidbares Überzugsmittel auf Basis eines Diencopolymerisats.

Es ist bekannt, Überzüge, insbesondere Einbrennüberzüge, auf elektrisch leitenden, insbesondere metallenen Körpern herzustellen, indem aus wäßrigen Lösungen bzw. wäßrigen Dispersionen von Salzen carbonsaurer anionischer Polymerer auf den Körpern die Polymeren in Form von Überzügen mittels Anaphorese elektrochemisch abgeschieden und gegebenenfalls anschließend eingebrannt werden. Eine Eigenart des Anaphorese-Verfahrens ist, daß nicht nur die Polymeren auf den Körpern (Anode) abgeschieden werden, sondern auch an den Körpern naszierender Sauerstoff sich entwickelt und (sofern die Körper aus unedlem Metall bestehen) Metallionen in Lösung gehen können. Die beiden letztgenannten Erscheinungen sind oft von Nachteil, da naszierender Sauerstoff die Polymeren in nachteiliger Weise chemisch verändern kann und Metallionen die Wasserfestigkeit der Überzüge herabsetzen sowie die Überzüge verfärben können. Letzteres ist insbesondere der Fall bei Körpern aus Kupfer oder Kupferlegierungen. Es ist eine Eigentümlichkeit des Kataphorese-Verfahrens, daß zwar ebenfalls auf den Körpern (Kathode) die Polymeren abgeschieden werden, jedoch an den Körpern Wasserstoff sich entwickelt und (auch wenn die Körper aus unedlem Metall bestehen) keine Metallionen in Lösung gehen. Da Wasserstoff die Polymeren im allgemeinen kaum in nachteiliger Weise chemisch verändert, ist insoweit das Herstellen von Überzügen mittels Kataphorese von Vorteil gegenüber dem Herstellen von Überzügen mittels Anaphorese.

Aus DE-PS 1 276 260 ist ein Verfahren zur Herstellung von Überzügen aus elektrisch leitenden Körpern bekannt, wobei aus wäßrigen Lösungen bzw. Dispersionen von Salzen stickstoffbasischer kationischer Polymerer die Polymeren auf den leitenden Körpern kathodisch abgeschieden und anschließend eingebrannt werden.

Aus DE-OS 2 057 799 ist ein Verfahren und Überzugsmittel für die elektrophoretische Beschichtung bekannt, worin eine Zusammensetzung verwendet wird, die ein aminhaltiges Harz in Kombination mit einem vollständig verkappten Isocyanat enthält. Das dort verwendete Harz kann quaternäre Ammoniumsalzgruppen enthalten, leitet sich aber nicht von einem Epoxyharz ab und ist nicht selbsthärtend.

Aus GB-PS 1 426 222 sind Überzugsmittel für die kataphoretische Beschichtung bekannt, wobei die Überzugsmischung wäßrige organische oder anorganische Säure sowie ein spezielles Harz enthält. Dieses Harz ist ein Reaktionsprodukt eines Copolymerisats aus 5 bis 50% äthylenisch ungesättigten, Epoxigruppen enthaltenden Monomers und 50 bis 95% ungesättigtes Vinylmonomer oder Acrylmonomer ohne Epoxigruppen, mit einem sekundären Amin. Das vorbekannte Copolymerisat ist beispielsweise ein Glycidylmethacrylat/Styrol-Copolymerisat.

Gemäß US-PS 3 937 679 werden quaternäre Ammoniumharze, die als wäßrige elektrophoretisch abscheidbare Überzugsmassen verwendet werden, zwingend in Kombination mit Zusatzharzen, nämlich einem Amin-Aldehydkondensationsprodukt und einem ungesättigten Methylolphenoläther eingesetzt. Es findet sich dort kein Hinweis, daß Polymerharze aus Glycidylacrylat und Butadien als solche in der Verwendung für elektrophoretisch abscheidbare Überzüge bekannt sind.

In der vorbekannten Zusammensetzung der US-PS 4 038 166 wird als kathodisch abscheidbares Überzugsmittel gleichfalls eine Kombination aus einem quarternären Oniumsalz, insbesondere Ammoniumsalz eines synthetischen Harzes mit einem Amin/Aldehydkondensationsharz vorgesehen, in welcher Kombination das Amin/Aldehydkondensationsharz zwingend erforderlich ist.

Die bisher für die kathodische Abscheidung entwickelten Überzugsmittel weisen jedoch hinsichtlich der Eigenschaften der damit erhaltenen Überzüge noch einige Nachteile auf. Besonders die Haftfestigkeit der Überzüge auf dem Untergrund, ihre Elastizität und ihre Korrosionsbeständigkeit sind verbesserungsbedürftig.

Der Erfindung liegt die Aufgabe zugrunde, kathodisch abscheidbare Überzugsmittel herzustellen, deren Überzüge auf dem Substrat eine verbesserte Haftfestigkeit und Elastizität neben guter Härte und Korrosionsbeständigkeit aufweisen.

Die Erfindung löst die Aufgabe mit einem kathodisch abscheidbaren Überzugsmittel auf Basis wasserlöslicher oder in Wasser dispergierbarer, kationisch eingestellter polymerer Filmbildner, wobei das Überzugsmittel gegebenenfalls übliche Zusätze enthält. Das kathodisch abscheidbare Überzugsmittel der vorliegenden Erfindung ist dadurch gekennzeichnet, daß der polymere Filmbildner ein Reaktionsprodukt eines Copolymerisats (A) aus

a)   40 bis 90 Gew.-% 4 bis 8 C-Atome aufweisendem Dien,

b)   60 bis 10 Gew.-% Epoxigruppen enthaltendem, copolymerisierbarem, äthylenisch ungesättigtem Monomer,

c)   0 bis 50 Gew.-% copolymerisierbarem, äthylenisch ungesättigtem Monomer, das keine Epoxigruppen enthält,

mit sekundärem Amin (B) ist, wobei die Aminogruppe mit organischer oder anorganischer Säure quaterniert worden ist.

Geeignete Dien-Komponenten des Copolymerisats sind 1,3-Butadien, 2-Methylbutadien-1,3, 2,3-Dimethylbutadien-1,3 oder Chloropren. Der Anteil des Diens im Copolymerisat beträgt 40 bis 90 Gew.-%. Vorzugsweise enthält das Copolymerisat 1,3-Butadien.

Das Copolymerisat enthält ferner als wesentliche Komponente ein Epoxigruppen enthaltendes, copolymerisierbares, äthylenisch ungesättigtes Monomer. Der Anteil dieses Monomers im Copolymerisat beträgt 10 bis 60 Gew.-%. Bevorzugte Epoxigruppen enthaltende Monomere sind beispielsweise der Glycidylester der Acryl- oder Methacrylsäure. Weiterhin können auch Vinyl- oder Allylester von epoxidierten ungesättigten Fettsäuren eingesetzt werden, wie 2,3-Epoxi-buttersäureallylester. Ferner Glycidylester von Dicarbonsäuren, wie Maleinsäure-allylglycidylester oder Phthalsäure-allyl-glycidylester. Schließlich eignen sich auch Diolefine, deren eine Doppelbindung expoxidiert worden ist, wie Vinyläthylenoxid, 1-Methyl-1-vinyl-äthylenoxid, 3,4-Epoxi-1-vinylcyclohexan, Glycidylallyläther.

Die Aminogruppe des Reaktionsproduktes entstammt sekundären Aminen, die mit der Epoxigruppe umgesetzt worden sind. Geeignete sekundäre Amine können gleiche oder verschiedene, gegebenenfalls substituierte Alkyl-, Cycloalkyl- oder Arylreste mit 1 bis 20 Kohlenstoffatomen enthalten, beispielsweise Diäthylamin, Diisopropylamin, Dibutylamin, Morpholin, Piperidin, Pyrrolidin, ebenso Alkanolamine, z. B. Diäthanolamin, Diisopropanolamin.

Die Menge des Amins für die Umsetzung mit den Epoxigruppen wird so ausgewählt, daß sie mindestens ausreichend ist, um dem Harz nach Reaktion mit einer Säure einen kationischen Charakter zu verleihen. In manchen Fällen werden im wesentlichen alle Epoxigruppen mit Amin umgesetzt. Es können aber auch überschüssige Epoxigruppen im Harz verbleiben, die später unter Einwirkung von Wasser zu Hydroxylgruppen hydrolysieren. Gegebenenfalls kann die Umsetzung des Amins mit der Epoxigruppe vor der Polymerisation erfolgen. Hierfür wird das Amin mit den Epoxigruppen enthaltenden Monomeren gemischt und, falls dies erforderlich ist, auf mäßig erhöhte Temperatur erwärmt, z. B. auf etwa 50 bis 110° C.

Die Wasserlöslichkeit oder Dispergierbarkeit des erfindungsgemäßen Überzugsmittels ist durch die Behandlung des Reaktionsproduktes aus dem Copolymerisat und dem sekundären Amin mit organischer Säure, wie Ameisen-, Essig-, Propion-, Milch- oder Buttersäure, oder durch Behandlung mit anorganischer Säure, wie Bor-, Salz-, Phosphor- oder Schwefelsäure herbeigeführt. Die Menge an Säure zur Neutralisation des Amins wird so gewählt, daß sie ausreichend ist, um das Harz in Wasser löslich oder dispergierbar zu machen, wobei es vorteilhaft ist, einen pH-Wert der wäßrigen Lösung zwischen etwa 3 und 8 einzustellen.

Das mit dem sekundären Amin zur Reaktion gebrachte Copolymerisat des erfindungsgemäßen Überzugsmittels kann gegebenenfalls noch ein copolymerisierbares, äthylenisch ungesättigtes Monomer enthalten, welches keine Epoxigruppen enthält. Comonomere dieser Art dienen gewünschtenfalls der Eigenschaftsverbesserung des polymeren Films, wie Verbesserung des Haftvermögens, der Härte oder Abriebfestigkeit. Geeignete Comonomere vorgenannter Art sind beispielsweise stickstoffhaltige, äthylenisch ungesättigte, aromatische, aliphatische oder cycloaliphatische Monomere, wie Vinylpyridin, Dimethylaminoäthylacrylat, 1-Vinylpyrrolidin-2. Ferner Acrylate oder Methylacrylate, wie Butylacrylat, Methylmethacrylat. Weiterhin Vinylacetat, Styrol. Comonomere der genannten Art, die keine Epoxigruppen enthalten, können in dem Copolymerisat bis zu einem Anteil von 50 Gew.-% enthalten sein.

Eine für das erfindungsgemäße Überzugsmittel zweckmäßige Zusammensetzung des Copolymerisats besteht aus

a)   40 bis 90 Gew.-% Butadien-1,3,
b)   60 bis 10 Gew.-% Glycidyl(meth)acrylat,
c)   0 bis 50 Gew.-% copolymerisierbarem, äthylenisch ungesättigtem Monomer, das keine Epoxigruppen enthält.

Die Herstellung des Copolymerisats erfolgt nach üblichen Methoden, zweckmäßig durch Lösungspolymerisation in organischen, gegebenenfalls geringe Mengen Wasser enthaltenden Lösungsmitteln unter Verwendung radikalischer Katalysatoren, beispielsweise Benzoylperoxid.

Die Umsetzung der Epoxigruppe des Copolymerisats mit sekundärem Amin erfolgt in an sich bekannter Weise unter Erwärmen und Rühren, beispielsweise bei 80° C während 2 Stunden.

Die wasserlöslichen Salze des Reaktionsproduktes können beispielsweise hergestellt werden, indem Säuren mit diesen in Berührung gebracht werden. Es ist jedoch auch möglich, die Säurekomponente bereits vor oder während der Polymerisation mit den Komponenten der Copolymerisate in Berührung zu bringen.

Das Herstellen der wäßrigen Lösung bzw. wäßrigen Dispersionen der Salze kann wiederum nach üblichen Methoden erfolgen. Eine geeignete Methode besteht beispielsweise darin, aus Lösungen der Polymerisate in organischen Lösungsmitteln und aus Wasser Dispersionen herzustellen und diese dann mit der Säurekomponente zu versetzen. Eine weitere geeignete Methode besteht beispielsweise darin, die Salze der Polymerisate als solche oder in Form ihrer Lösungen in organischen Lösungsmitteln in Wasser einzubringen. Im allgemeinen ist es besonders zweckmäßig, die Arbeitsbedingungen insgesamt so zu wählen, daß die Gesamtmenge der Salze in Form einer wäßrigen Lösung vorliegt oder eine größere Teilmenge in Form einer wäßrigen Lösung und eine kleinere Teilmenge in Form einer Dispersion. Es ist ferner im allgemeinen zweckmäßig, wenn der pH-Wert der Lösungen bzw. Dispersionen auf einen Wert von 1 bis 8, vorzugsweise von 3 bis 8, eingestellt ist.

Die wäßrigen Lösungen bzw. wäßrigen Dispersionen des salzartigen Reaktionsproduktes können zusätzlich andere, in Wasser lösliche bzw. in Wasser dispergierbare und im Gemisch mit den Salzen mittels Kataphorese elektrochemisch abscheidbare Bindemittel enthalten. Als solche eignen sich beispielsweise Epoxidharze, Alkydharze oder Gemische solcher Bindemittel. Die Gewichtsmenge dieser zusätzlichen anderen Bindemittel soll zweckmäßigerweise nicht größer sein als die Gewichtsmenge der salzartigen Reaktionsprodukte der Copolymerisate. Die Lösungen bzw. Dispersionen können ferner auch mittels Kataphorese elektrochemisch abscheidbare Hilfsstoffe enthalten, wie Pigmente, Härtungskatalysatoren und Mittel zur Verbesserung des Verlaufs.

Das Herstellen von Überzügen aus den wäßrigen Lösungen bzw. wäßrigen Dispersionen auf elektrisch leitenden, insbesondere metallenen Körpern erfolgt mittels Kataphorese durch elektrochemische Abscheidung und gegebenenfalls anschließendes Einbrennen. Auch hierbei kann nach üblichen Methoden gearbeitet werden: Die Körper werden in die Lösungen bzw. Dispersionen eingebracht und als Kathode geschaltet; ein weiteres elektrisch leitendes Medium wird ebenfalls in Berührung mit den Lösungen bzw. Dispersionen gebracht und als Anode geschaltet.

Das Überziehen erfolgt zweckmäßigerweise bei einer Gleichspannung von 2 bis 300, vorzugsweise 20 bis 150 Volt. Die Temperatur kann zweckmäßigerweise von 10 bis 50, vorzugsweise von 20 bis 40°C betragen. Die Zeit des Überziehens beträgt im allgemeinen etwa 0,5 bis 3 Minuten. Nach dem Auftragen der Überzüge werden die überzogenen Körper aus den Lösungen bzw. Dispersionen entfernt, mit Wasser gespült und zum Einbrennen der Überzüge 5 bis 180, vorzugsweise 20 bis 60 Minuten auf Temperaturen von 80 bis 250°C, vorzugsweise 120 bis 180°C, gehalten.

Das erfindungsgemäße kathodisch abscheidbare Überzugsmittel eignet sich besonders zum Herstellen von Einbrennüberzügen auf metallenen Körpern, wobei es von besonderem Vorteil ist, daß nicht nur Körper aus Eisen und Eisenlegierungen, wie Karosserieteile, mit hochwertigen Überzügen versehen werden können, sondern auch Körper aus Kupfer oder Kupferlegierungen. Das erfindungsgemäße Überzugsmittel ist ohne weiteren Zusatz durch thermische Behandlung härtbar. Der entstehende Film zeichnet sich besonders durch hohen Glanz, gute Chemikalien-, Wasser-, Alkali- und Korrosionsbeständigkeit aus. Es ist ein weiterer Vorteil des erfindungsgemäßen Überzugsmittels, daß durch geeignete Wahl der Polymerisationsbedingungen eine Optimierung des Copolymerisats möglich ist. So kann beispielsweise das Gewichtsverhältnis der Monomeren so eingestellt

werden, daß nach teilweiser Neutralisation des aminogruppenhaltigen Copolymerisats ein pH-Wert der wäßrigen Lösung von 6 bis 8 erhalten wird, wodurch Korrosionsprobleme der Lackbadinstallation vermieden werden. Weiterhin ist es ein wesentlicher Vorteil des erfindungsgemäßen Überzugsmittels, daß durch Variation des Gewichtsverhältnisses der Monomeren bei der Polymerisation die Ladungsdichte im Polymerisat beeinflußt werden kann. Dies hat einen besonderen Einfluß auf die spezifische Leitfähigkeit der wäßrigen Harzlösung und damit auf den Umgriff bei der Beschichtung von kompliziert geformten Metallteilen.

Ein weiterer wesentlicher Vorteil des erfindungsgemäßen Überzugsmittels ist, daß durch geeignete Wahl der Polymerisationsbedingungen das Molekulargewicht des Polymerisats im Hinblick auf eine gute Filmoberfläche beim Härten des Überzuges eingestellt werden kann. Bekanntlich werden bei der elektrophoretischen Abscheidung große Gasmengen an den Elektroden frei, die eine Porosität des Films bewirken können. Dies muß durch ein geeignetes Verlaufen des abgeschiedenen Films während des Härtungsvorgangs ausgeglichen werden. Für die Fähigkeit zum Verlauf ist in besonderer Weise die Viskosität des Harzes entscheidend, die wiederum in entscheidendem Maße vom Molekulargewicht abhängt. Hier liegt ein wesentlicher Vorteil des erfindungsgemäßen Überzugsmittels, indem bei der Polymerisation der Monomeren das Molekulargewicht des Polymerisats durch die Änderung von Monomerkonzentration, Initiatorkonzentration, Temperatur und eventueller Zusatz von Überträgern stark beeinflußt werden kann. Ein besonderer Vorteil des erfindungsgemäßen Überzugsmittels ist außerdem die hohe Elastizität des abgeschiedenen Films. Diese ist in entscheidendem Maße durch den hohen Anteil an Kohlenstoffdoppelbindungen in der Polymerkette innerhalb der Dienkomponente gegeben. Diese Elastizität ist besonders bei Lacküberzügen von Vorteil auf Oberflächen, die einer späteren Verformung unterliegen.

Die Erfindung wird in den nachstehenden Beispielen näher erläutert.

Beispiel 1

In einer 0,7-l-Glasflasche werden 150 g Toluol, 1,9 g Benzoylperoxid, 45 g Glycidylmethacrylat und 105 g Butadien-1,3 zusammengegeben. Die Flasche wird verschlossen und 12 Stunden bei 75°C geschüttelt. Anschließend wird die Lösung mit Methanol versetzt und das sich abscheidende Polymer im Vakuum bei 40°C getrocknet.

100 g dieses flüssigen Polymers werden in einem Dreihalskolben mit Rührer und Rückflußkühler unter Stickstoff mit 24 g Diäthylamin versetzt und 2 Stunden bei 80°C gerührt. Das Produkt wird anschließend mit 40 g Äthylenglykolmonobutyläther vermengt, mit 15 g Milchsäure versetzt und mit 840 g voll entsalztem Wasser verdünnt. Die klare wäßrige Lösung wird mit Triäthylamin auf einen pH-Wert von 6,2 eingestellt.

Aus der so hergestellten Lösung wird das Harz mit einer Gleichspannung von 150 Volt auf einem als Kathode geschalteten Eisenblech innerhalb von 2 Minuten abgeschieden. Der Film wird sodann 15 Minuten bei 185°C eingebrannt und bildet dann einen gleichmäßigen, harten und fest haftenden Belag.

### Beispiel 2

In einer Flasche werden 150 g Toluol, 1,9 g Benzoylperoxid, 45 g Glycidylallyläther, 28 g Vinylpiperidin und 105 g Butadien-1,3 zusammengegeben und die Flasche verschlossen. Bei 75°C wird der Inhalt 24 Stunden geschüttelt, anschließend mit Methanol versetzt und das sich abtrennende Polymer im Vakuum bei 40°C getrocknet.

100 g des getrockneten Produktes werden anschließend mit 12 g Essigsäure und 50 g Äthylenglykolmonobutyläther vermengt und mit 1000 g voll entsalztem Wasser verdünnt. Die Lösung wird mit Ammoniaklösung auf einen pH-Wert von 5,9 eingestellt.

Aus dieser wäßrigen Harzlösung wird auf einem als Kathode geschalteten Eisenblech mit einer Gleichspannung von 150 Volt innerhalb von 2 Minuten ein Polymerfilm abgeschieden, der nach einer 15minütigen Härtung bei 180°C eine Schichtdicke von 18 μm hat. Der Überzug ist glatt, hart und glänzend.

### Beispiel 3

Aus dem in Beispiel 1 hergestellten Copolymerharz wird eine Pigmentpaste hergestellt. Hierzu werden 100 Gew.-Tle. des mit Milchsäure neutralisierten Copolymers mit 30 Gew.-Tln. Titandioxid, 15 Gew.-Tln. Aluminiumsilikat und 2 Gew.-Tln. Ruß zusammengegeben und auf einem Dreiwalzenstuhl zu einer homogenen Masse verrieben. 50 Gew.-Tle. dieser Pigmentpaste werden mit 100 Gew.-Tln. des in Beispiel 1 hergestellten 70%igen Harzes gemischt und mit 850 Gew.-Tln. Wasser verdünnt.

Diese Lösung hat einen pH-Wert von 6,7 und eine Leitfähigkeit von 1600 μS · cm⁻¹.

Mit einer Gleichspannung von 100 Volt wird in 2 Minuten auf einem als Kathode geschalteten Eisenblech ein Lackfilm abgeschieden, der nach einer 15minütigen Härtung bei 180°C eine Schichtdicke von 14 μm hat.

### Beispiel 4

Aus 100 g Butadien-1,3, 45 g Glycidylmethacrylat, 25 g Diäthanolamin und 2 g Azo-iso-butyronitril wird wie in Beispiel 1 beschrieben in 150 g Toluol ein Copolymer hergestellt. Das Produkt wird mit 40 g Äthylenglykolmonobutyläther und 8 g Essigsäure (95%ig) versetzt und anschließend mit 850 g voll entsalztem Wasser zu einer klaren Lösung verdünnt. Die Lösung hat einen pH-Wert von 6,8.

Aus dieser Lösung wird mit einer Gleichspannung von 170 Volt auf einem als Kathode geschalteten Eisenblech, das mit einer Zinkphosphatschicht überzogen ist, innerhalb von 1,5 Minuten ein Polymerfilm abgeschieden, der bei 185°C 15 Minuten lang in einem Ofen gehärtet wird. Die Filmdicke beträgt 16 μm.

Die Elastizität und Haftung des Films auf der Metalloberfläche wird im Erichsen Tiefungstest untersucht. Die Eindrucktiefe beträgt sowohl vor als auch nach einer zweitägigen Wärmelagerung bei 100°C mehr als 10 mm.

Im Salzsprühtest nach DIN 50 021 zeigt ein angeritztes Prüfblech nach 504 Stunden weniger als 1 mm Unterwanderung.

### Beispiel 5

Aus 100 g Butadien-1,3, 35 g Glycidylmethacrylat, 15 g 2-Vinylpyridin, 16 g Diäthylamin und 1,5 g Benzoylperoxid wird ein Copolymerisat wie in Beispiel 1 beschrieben in 150 g Toluol als Lösungsmittel bei 75°C hergestellt. Das Produkt wird mit 40 g Äthylenglykolmonobutyläther und 15 g Milchsäure versetzt und mit 800 g voll entsalztem Wasser verdünnt.

Wie in Beispiel 4 beschrieben, wird aus dieser Lösung auf einem phosphatierten Eisenblech ein Polymerfilm mit einer Gleichspannung von 120 Volt abgeschieden. Der Film hat nach dem Einbrennen bei 180°C eine Dicke von 14 μm, zeigt nach 2 Tagen Wärmelagerung bei 100°C eine Eindrucktiefe von mehr als 10 mm bis zum ersten Abplatzen des Films von der Metalloberfläche und zeigt nach 504 Stunden Lagerung im Salzsprühtest nach DIN 50 021 eine Unterwanderung von weniger als 1 mm.

### Patentansprüche

1. Kathodisch abscheidbares Überzugsmittel auf Basis wasserlöslicher oder in Wasser dispergierbarer, kationisch eingestellter polymerer Filmbildner sowie gegebenenfalls üblichen Zusätzen, dadurch gekennzeichnet, daß der polymere Filmbildner ein Reaktionsprodukt eines Copolymerisats (A) aus

a) 40 bis 90 Gew.-% 4 bis 8 C-Atome aufweisendem Dien,

b) 60 bis 10 Gew.-% Epoxigruppen enthaltendem, copolymerisierbarem, äthylenisch ungesättigtem Monomer,

c) 0 bis 50 Gew.-% copolymerisierbarem, äthylenisch ungesättigtem Monomer, das keine Epoxigruppen enthält,

mit sekundärem Amin (B) ist, wobei die Aminogruppe mit organischer oder anorganischer Säure quaterniert worden ist.

2. Überzugsmittel nach Anspruch 1, dadurch gekennzeichnet, daß das Epoxigruppen enthaltende, äthylenisch ungesättigte Monomer der Glycidylester der Acryl- oder Methacrylsäure; der Vinyl- oder Allylester einer epoxidierten ungesättigten Fettsäure; ein Diolefin, dessen eine Doppelbindung epoxidiert ist; oder der Vinyl- oder Allylester einer Monoglycidylesterdicarbonsäure ist.

3. Überzugsmittel nach den Ansprüchen 1 und 2, dadurch gekennzeichnet, daß das Dien Butadien und/oder Isopren ist.

4. Überzugsmittel nach den Ansprüchen 1 bis 3, dadurch gekennzeichnet, daß die Epoxigruppen enthaltenden Monomere Glycidyl(meth)-acrylat sind.

5. Überzugsmittel nach den Ansprüchen 1 bis 4, dadurch gekennzeichnet, daß das sekundäre Amin Dimethylamin, Diäthylamin, Diäthanolamin, Diisopropylamin oder Diisopropanolamin ist.

6. Überzugsmittel nach den Ansprüchen 1 bis 5, dadurch gekennzeichnet, daß als quaternisierende organische Säure Essigsäure oder Milchsäure verwendet worden ist.

## Claims

1. A coating material which is adapted to be deposited on a cathode and comprises watersoluble or water-dispersible polymeric film-forming substances which are adjusted to contain cations, and, if desired, conventional additives, characterized in that the polymeric film-forming substance is a reaction product of a copolymer (A) of

a)   40 to 90% by weight of a diene having 4 to 8 carbon atoms,

b)   60 to 10% by weight of a copolymerizable, ethylenically unsaturated monomer which contains epoxy groups,

c)   0 to 50% by weight of a copolymerizable ethylenically unsaturated monomer which contains no epoxy groups,

with a secondary amine (B), wherein the amino group has been quaternated with organic or inorganic acid.

2. A coating material according to claim 1, characterized in that the ethylenically unsaturated monomer which contains epoxy groups is the glycidyl ester of acrylic or methacrylic acid, the vinyl or allyl ester of an epoxidated unsaturated fatty acid, a diolefin in which one double bond is epoxidated, or the vinyl or allyl ester of a monoglycidyl ester dicarboxylic acid.

3. A coating material according to claims 1 and 2, characterized in that the diene is butadien and/or isopren.

4. A coating material according to claims 1 to 3, characterized in that the monomers which contain epoxy groups are glycidyl (meth)acrylate.

5. A coating material according to claims 1 to 4, characterized in that the sedondary amine is dimethylamine, diethylamine, diethanolamine, diisopropylamine or diisopropanolamine.

6. A coating material according to claims 1 to 5, characterized in that acetic acid or lactic acid has been used as a quaternating organic acid.

## Revendications

1. Agent de revêtement, qui peut être déposé par voie cathodique, à base d'un produit filmogène polymère sous forme cationique, soluble dans l'eau ou dispersable dans l'eau, ainsi que, le cas échéant, d'additifs habituels, caractérisé en ce que le produit filmogène polymère est un produit de réaction d'un copolymère (A) constitué de:

a)   40 à 90% en poids d'un diène ayant de 4 à 8 atomes de carbone,

b)   60 à 10% en poids d'un monomère éthyléniquement insaturé copolymérisable, contenant des gropes époxy,

c)   0 à 50% en poids d'un monomère éthyléniquement insaturé copolymérisable qui ne contient pas de groupe époxy,

et d'une amine (B) secondaire, le groupe amino étant quaternisé par un acide organique ou minéral.

2. Agent de revêtement suivant la revendication 1, caractérisé en ce que le monomère éthyléniquement insaturé contenant des groupes époxy est l'ester glycidylique de l'acide acrylique ou de l'acide méthacrylique, l'ester vinylique ou allylique d'un acide gras insaturé époxydé; une dioléfine dont l'une des doubles liaisons est époxydée; ou l'ester vinylique ou allylique d'un acide dicarboxylique déjà monoestérifié par un glycidyle.

3. Agent de revêtement suivant les revendications 1 et 2, caractérisé en ce que le diène est le butadiène et/ou l'isoprène.

4. Agent de revêtement suivant les revendications 1 à 3, caractérisé en ce que les monomères contenant des groupes époxy sont des (méth)acrylates de glycidyle.

5. Agent de revêtement suivant les revendications 1 à 4, caractérisé en ce que l'amine secondaire est la diméthylamine, la diéthylamine, la diéthanolamine, la diisopropylamine ou la diisopropanolamine.

6. Agent de revêtement suivant les revendications 1 à 5, caractérisé en ce que, comme acide organique de quaternisation, on utilise l'acide acétique ou l'acide lactique.